# EUROPEAN PATENT SPECIFICATION

(11) **EP 3 544 137 B1**
(45) Date of publication and mention of the grant of the patent: **05.05.2021**
(21) Application number: 18163334.8
(22) Date of filing: 22.03.2018
(51) Int. Cl.: H02J 1/10, H02M 1/00, H04N 7/20, H04H 40/90, H04H 20/63

(54) **A SIGNAL DISTRIBUTION DEVICE COMPRISING A POWER SUPPLY CIRCUIT**
SIGNALVERTEILUNGSVORRICHTUNG MIT EINER STROMVERSORGUNGSSCHALTUNG
DISPOSITIF DE DISTRIBUTION DE SIGNAUX COMPRENANT UN CIRCUIT D'ALIMENTATION ÉLECTRIQUE

(43) Date of publication of application: 25.09.2019
(73) Proprietor: Unitron NV, 8970 Poperinge (BE)
(72) Inventor: VIAENE, Davy, 8660 De Panne (BE); GOEMAERE, Joris, 8480 Ichtegem (BE); PARDUBICKÝ, Vojtech, 285 11 Nepomerice (CZ); CARON, Hendrik, 8900 Dikkebus (BE); TANCIN, Libor, 530 02 Pardubice (CZ); DELEU, Stephen, 9080 Beervelde (BE)
(74) Representative: De Clercq & Partners

(56) References cited:
- EP-A1- 1 096 667
- EP-A2- 1 233 328
- US-A1- 2007 296 274

## Description

### Field of the invention

The present invention generally relates to a power supply circuit for a signal distribution device. More particularly a signal distribution device comprising such a power supply circuit and a corresponding method of operating such a device. The present invention is especially useful in the domain of signal distribution devices suitable for distribution of satellite signals, such as for example satellite multiswitches, etc. which are able to extract power from a plurality of receivers.

### Background

Several prior art power supply circuits for signal distribution devices, such as for example satellite signal distribution devices, which are powered from a plurality of power supplying devices such as for example suitable integrated receiver devices such as set top boxes, etc. are for example known from US2007/0296274. Typically, these prior art power supply circuits do not allow for an efficient and reliable operation which distributes the power extracted from the different power supplying devices evenly, or otherwise there is required a complex design requiring a large number of power dissipating components which reduces efficiency of the power supply circuit.

Additionally, the prior art signal distribution devices have to limit the power maximum allowable power consumption to the maximum allowable power limit of a single power supplying device, which limits the functionality which can be integrated into such signal distribution device, or otherwise requires the use of an external power supply device which is typically undesired, especially in a multiple dwelling context as the energy consumption of such an external power supply device is typically not directly allocated to the user actively making use of the signal distribution device.

The document EP 1 233 328 discloses a signal distribution device according to the preamble of claim 1.

There thus still exists a need for an improved signal distribution device comprising a power supply circuit which overcomes the abovementioned drawbacks.

### Summary

According to a first aspect of the invention, there is provided a signal distribution device comprising:
- a plurality of connectors, configured to be coupled to at least one power supplying device comprising a predetermined maximum allowable power limit;
- at least one signal processing circuit;
- at least one corresponding power supply circuit coupled to said connectors and said signal processing circuit, said power supply circuit configured to power at least the signal processing circuit by extracting power via said connectors when extracting power from said at least one power supplying device when coupled to said connectors,
- the signal processing circuit comprises a plurality of modules requiring power provided at a corresponding plurality of supply voltages;
   characterised in that
- the signal distribution device is configured to operate in an operating mode in which the power extracted by at least one power supply circuit for powering at least the corresponding signal processing circuit exceeds the maximum allowable power limit of a single power supplying device;
- the power supply circuit, when in said operating mode, is configured to generate the plurality of supply voltages for the corresponding plurality of modules of the corresponding signal processing circuit in such a way that it is prevented that all modules extract power via the same connector when extracting power from the at least one power supplying device when coupled to this connector.

In this way the functionality of the signal processing circuit can be extended to go beyond the power limits of a single power supplying device in an efficient way without the risk of overloading such a power supplying device and without a complex design of the power supply circuit and/or the signal processing circuit.

According to an embodiment the signal distribution device, wherein, in said operating mode, the power required by the power supply circuit, when powering all modules of the corresponding signal processing circuit, exceeds the maximum allowable power limit of a single power supplying device.

In this way, a full power operating mode is made possible, when more power supply sources than one single power supplying device is available to power the signal distribution device, without the risk of overloading a single power supplying device. It is clear that this allows, for example upon detection of the situation of only one single power supplying device being present to still power one or some, but not all of the modules of the signal processing circuit, thereby for example enabling the signal processing circuit to enter into another mode of operation in which its power consumption is reduced to a level that allows powering of the signal distribution device from a single power supplying device. Such an alternative mode of operation could for example be obtained by means of operating the signal processing circuit in a mode with reduced functionality, at a reduced processing speed, etc.

According to an embodiment, there is provided a signal distribution device, wherein, in said operating mode, the power supply circuit is configured to generate the plurality of supply voltages in such a way that it is prevented that all modules extract power from the same connector, when only extracting power via one connector from the at least one power supplying device coupled to this connector.

In this way, a particularly simple coupling can be established by the power supply circuit between a connector and its associated module for extraction of the required power.

According to a further embodiment, there is provided a signal distribution device, wherein, in said operating mode, the power supply circuit is further configured to generate the supply voltages in such a way that one or more of the modules, but not all of the modules, extract power from an associated one of the connectors when coupled to at least one power supplying device.

In this way each module extracts power from not more than one connectors. In this way the power of the modules, which cannot be extracted all from the same connector, is shared in a simple way, without requiring additional complexity from the signal processing circuit when it comprises a plurality of such modules requiring power at a plurality of supply voltages.

According to a further embodiment, there is provided a signal distribution device, wherein, in said operating mode:
- the plurality of modules consists of a plurality of non-empty, non-overlapping subsets, each subset comprising at least one module; and
- the power supply circuit is further configured to generate the supply voltages in such a way that each subset is configured to extract power from a different one of the connectors when coupled to at least one power supplying device.

This for example allows to perform a simple mapping between such subsets and the available connectors for extraction of power, or to group the modules in such a way that the power required for each subset is distributed in a balanced way. The power required for each subset being as similar as possible. This then ensures a fair and balanced distribution among the different connectors, and thus for example among the different users of receivers coupled to these connectors.

According to a further embodiment, there is provided a signal distribution device, wherein, in said operating mode, the plurality of subsets are configured such that the power required by the one or more modules of each subset does not exceed the predetermined maximum allowable power limit of the power supplying devices.

In this way one subset can extract power in a safe way from a single connector coupled to a power supplying device.

According to a further embodiment, there is provided a signal distribution device, wherein the predetermined maximum allowable power limit is determined in function of the maximum power that is allowed to be extracted from one power supplying device when coupled to the connector.

In this way, even in a worst-case situation, in which only one single power supplying device is available for powering the signal distribution device, overloading of this single power supplying device or faulty operation of the signal distribution device is avoided. According to embodiments in which there is available an external power supply for supplementing the power of this single power supplying device, the signal distribution device can then be operated in the full power operating mode by combining the power extracted from this single power supplying device with the power from the external power supply, in such a way that the power extracted from this single power supplying device does not exceed its maximum allowable power limit. According to other embodiments, as described above, for example, when no external power supply is available to the signal distribution device, in such a worst case scenario in which only a single power supplying device is available for extracting power for the signal distribution circuit, the signal distribution circuit will not be provided with sufficient power by the power supply circuit and will for example be configured, for example upon detection of only a single power supplying device being available, to enter into another operating mode for example with a reduced power consumption as described above. According to still a further embodiment, in such a worst case scenario in which only a single power supplying device is available for extraction of power for the signal distribution circuit and no further power supplies or suitable modes of operation of the signal distribution circuit are available to the signal distribution device, for example upon failure of the power supply of the signal distribution device, when only a single power supplying device is available, the power supply circuit will prevent the signal distribution device from extracting a level of power which exceeds the maximum allowable power limit from the single power supplying device. In this way, in such failure scenario's a cascade overload effect on the power supplying devices of the assembly can be avoided, even if this means that, according to such embodiments, the signal distribution circuit cannot be operated in the operating mode which would exceed the maximum allowable power limit.

According to a further embodiment, there is provided a signal distribution device, wherein, in said operating mode, said power supply circuit is further configured to:
- be coupled to an external power supply comprising a maximum allowable power limit which exceeds the power required by the signal distribution device minus the maximum allowable power limit of a single power supplying device multiplied by the number of power supply circuits; and
- extract power from said external power supply, when coupled, only to power the modules of the corresponding signal processing circuit which are not able to extract power from said at least one power supplying device when coupled to said connectors.

In this way, the power extracted from the external power supply is reduced to the minimum, and as much as possible of the power is extracted from the power supplying devices. The external power supply thus only serves as a backup power supply in order to allow the signal distribution device to operate, when insufficient power supplying devices are available to power all modules. This is especially beneficial in the context of for example a satellite signal distribution system, as in this way the power is maximally supplied by the end users of the receivers making use of the signal distribution device, which especially in a multiple dwelling context is desirable.

According to a further embodiment, there is provided a signal distribution device, wherein, in said operating mode, said power supply circuit is further configured to:
- be coupled to an external power supply comprising a maximum allowable power limit which exceeds the power required by the signal distribution device minus the maximum allowable power limit of a single power supplying device multiplied by the number of power supply circuits, and which is lower than the power required by the signal distribution device.

In this way the power required from the external power supply can be reduced, thereby allowing for a smaller, more efficient, less complex external power supply requiring less resources.

According to a further embodiment, there is provided a signal distribution device, wherein:
- at least one of said connectors is configured to be coupled to said external power supply; and/or
- the signal distribution device further comprises a power supply connector coupled to said power supply circuit and configured to be coupled to said external power supply;
- the signal distribution device further comprises at least one other type of connector coupled to said power supply circuit and configured to be coupled to said external power supply.

According to a further embodiment, there is provided a signal distribution device, wherein the power supply circuit is further configured such that power is provided to the plurality of modules according to a predetermined sequence.

In this way, the correct operation of the signal processing circuit can be guaranteed, independent of the number or type of connectors from which power can be extracted.

According to a further embodiment, there is provided a signal distribution device, wherein the power supply circuit is further configured such that power is provided to the plurality of subsets according to a predetermined sequence.

In this way, the correct operation of the signal processing circuit can be guaranteed, independent of the number or type of connectors from which power can be extracted.

According to a further embodiment, there is provided a signal distribution device, wherein:
- the power supplying devices are receivers; and
- the at least one signal processing circuit is respectively further coupled to said connectors for exchanging signals with said receivers when coupled to said connectors.

Application of the signal distribution devices in the context of a satellite signal distribution assembly is beneficial as in this way the functionality of the signal processing circuit can be extended beyond the limit of the maximum power limit of a single receiver without reducing the possibility to efficiently extract as much power as possible from the power supplying devices.

According to a second aspect of the invention, there is provided an assembly comprising at least one signal distribution device according to the first aspect of the invention, wherein the assembly further comprises one or more of the following:
- said at least one power supplying devices coupled to said connectors;
- said external power supply coupled to said signal distribution device.

According to an embodiment, there is provided an assembly comprising a plurality of signal distribution devices according to the first aspect of the invention, wherein:
- the assembly further comprises at least one shared external power supply;
- the plurality of signal distribution devices are cascadably coupled in such a way that each signal distribution device is able to extract power from the at least one shared external power supply when coupled to the assembly; and
- the at least one shared external power supply comprises a maximum allowable power limit which is higher than:
   - the power required by the plurality of signal distribution devices of the assembly when in said operating mode; minus
   - the maximum allowable power limit of a single power supplying device multiplied by the number of signal distribution circuits of said plurality of said signal distribution devices of said assembly.

In this way the power required from the shared external power supplies of such an assembly is reduced and in a failure mode, in which for example one of the shared power supplies fails, there is no risk of a cascade effect in which other devices, such as the power supplying devices risk of being overloaded. This increases the efficiency of the signal distribution assembly, allows for a more efficient distribution of the extraction of the power to the users which effectively make use of the signal distribution assembly and reduces installation cost.

According to a further embodiment, there is provided an assembly, wherein the shared external power supply comprises a maximum allowable power limit which is lower than the power required by all signal distribution devices of the assembly when in said operating mode.

This allows to reduce the overall power required by external power supplies for such an assembly

According to a third aspect of the invention, there is provided a method of operating a signal distribution device according to the first aspect of the invention, characterized in that said power supply circuit, when in said operating mode, generates the plurality of supply voltages for the corresponding plurality of modules of the signal processing circuit in such a way that it is prevented that all modules extract power via the same connector when extracting power from the at least one power supplying device when coupled to this connector.

### Short description of the Figures

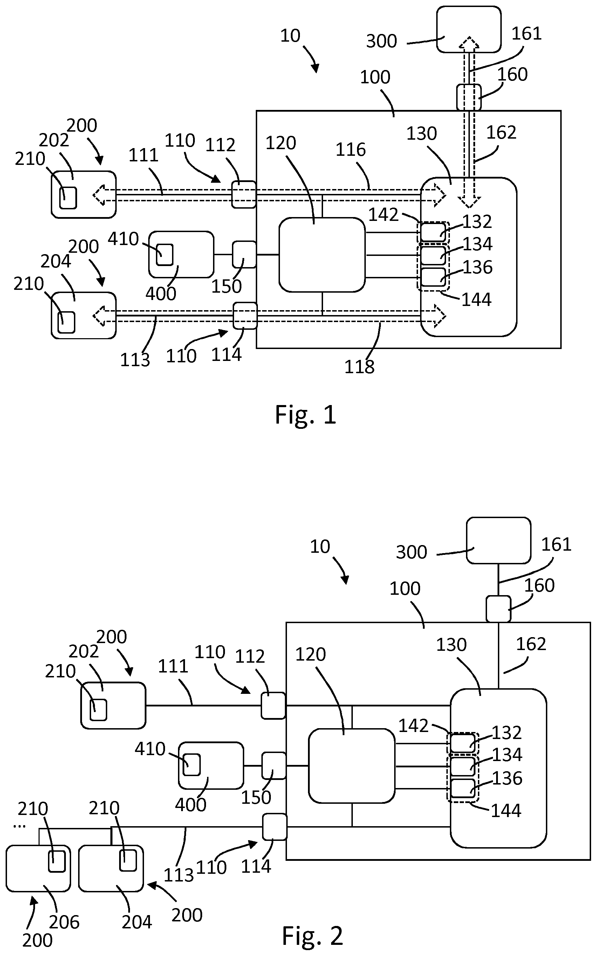

Exemplary embodiments will now be described in more detail by means of the drawings in which Figures 1 to 7 show alternative embodiments of an assembly comprising at least one signal distribution device according to the invention.

### Detailed description

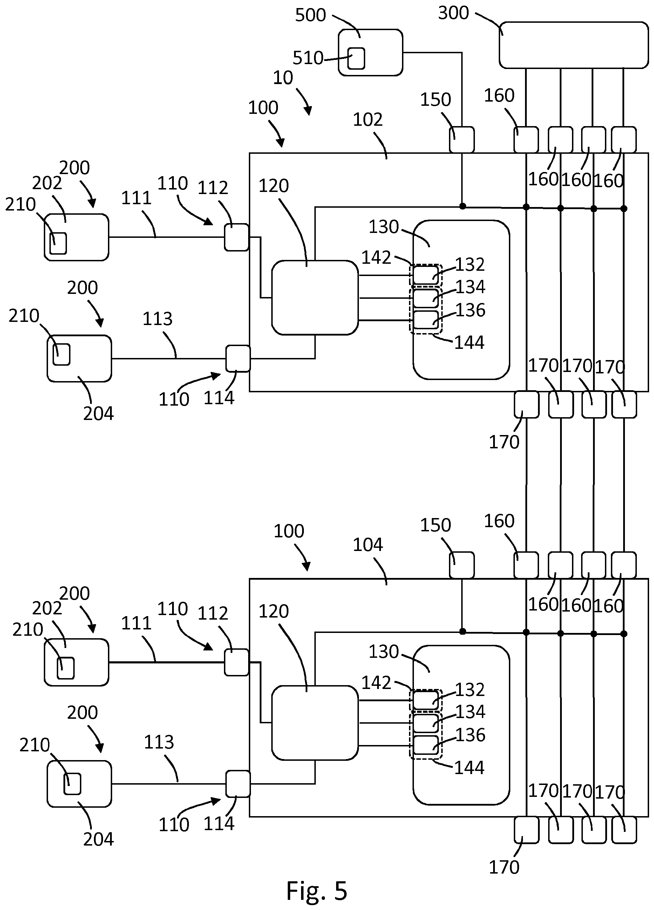

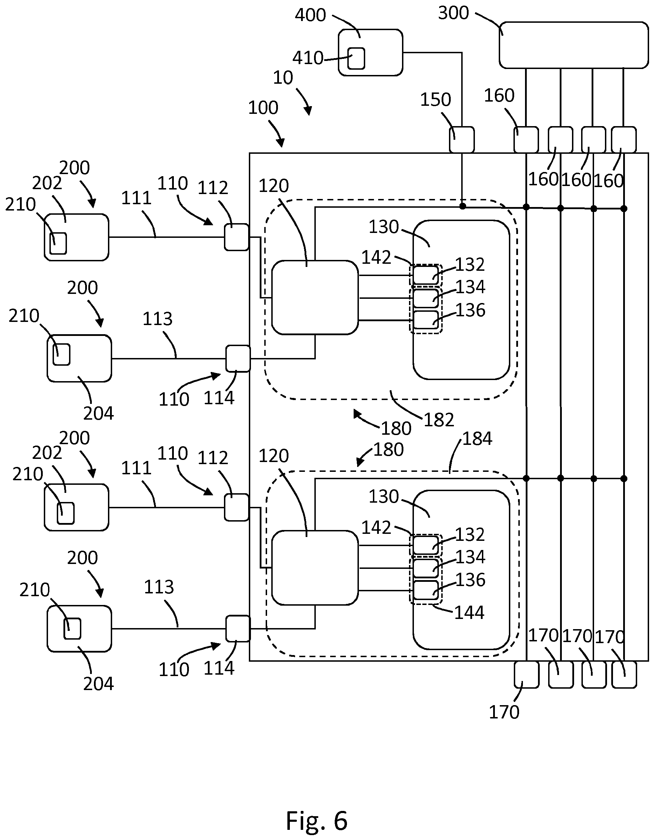

Figure 1 schematically shows an embodiment of a signal distribution device 100 according to the invention. According to the embodiment shown, the signal distribution device 100 is part of a signal distribution system 10, for example a satellite signal distribution system 10. According to the embodiment shown, the signal distribution device 100 for example distributes satellite signals received from a suitable signal source 300, such as for example a Low Noise Block or LNB from a satellite dish, a headend, another upstream, cascadable signal distribution device, etc.. As shown, the signal source 300 is coupled to a suitable input connector 160, for example by means of a suitable cable connection 161, such as for example a coaxial cable, etc.. As further shown, the input connector 160 is coupled to a signal processing circuit 130 of the signal distribution device 100. In this way, the signal processing circuit 130 is configured to exchange signals 162 with the signal source 300 coupled to the input connector 160. This for example means that the signal processing circuit 130 for example at least partly receives signals 162 comprising a television signal, data, etc. as provided by the signal source 300 for further distribution to receivers 200, as will be described in further detail below. According to further examples, the signal distribution device 100, could also exchange further signals 162 with the signal source 300, such as for example control signals, messages, data, etc. for example for controlling the operation of the signal source 300, or any other suitable data exchange. As shown in the embodiment of Figure 1, the exchange of the signals 162 between the signal source 300 and the signal processing circuit 130 of the signal distribution device 100 via the input connector 160, is schematically illustrated by means of a striped bidirectional arrow, showing the exchange of messages in the form of suitable analog and/or digital signals 162. Although according to the embodiment shown in Figure 1, there is provided only a single input connector 160, it is clear that, according to alternative embodiments, it is possible that the signal distribution device 100 comprises a plurality of such input connectors 160, as will for example be described with reference to Figure 5 or 6 further below.

As further shown, according to the embodiment of the signal distribution system 10, the signal distribution device 100 is configured to distribute the signals 162 received from the signal source 300 via the input connector 160, to at least one receiver 200 via a plurality of corresponding output connectors 110. Although, according to the embodiment shown in Figure 1, each connector 110, can be coupled to one receiver 200, it is clear that alternative embodiments are possible. Such an alternative embodiment is for example shown in Figure 2, in which there can be coupled a plurality of receivers 200 to an output connector. According to the embodiments shown in Figure 1, the signal distribution device 100 comprises two output connectors 110. It is however clear that a different number of such connectors 110 are possible, as long as in general, the signal distribution device 100 comprises a plurality of such connectors 110. In the state of the signal distribution system 10, shown according to the embodiment of Figure 1, each output connector 110 is respectively coupled to a corresponding receiver 200, it is however clear that other states of the embodiment of the signal distribution system 10 are possible in which, a different number of receivers 200 is coupled to each output connector 110. As will be described in further detail below, when coupled to the output connector 110, the receivers 200 according to this embodiment are capable of exchanging signals and exchanging power with the signal distribution device 100. According to a particular example the receivers 200 could for example be suitable receiver devices for receiving satellite signals, such as for example a set top box or STB, an integrated receiver device or IRD, etc. A first output connector 112 is coupled to a first receiver 202, for example by means of a suitable cable connection 111, such as for example a suitable coaxial cable. Similarly, a second output connector 114 is coupled to a second receiver 204, for example also by a suitable cable connection 113, such as for example a suitable coaxial cable. As shown, the signal processing circuit 130 is coupled to the output connectors 110 for exchanging signals with the signal processing circuit 130. According to the embodiment show, the signal processing circuit 130 is in this way able to exchange signals 116 with the first receiver 202 via the first output connector 112, when, as shown, the first receiver 202 is coupled to the first output connector 112 by means of the cable connection 111. Similarly, as shown, the signal processing circuit 130 is also able to exchange signals 118 with the second receiver 204 via the second output connector 114, when, as shown, the second receiver 204 is coupled to the second output connector 114 by means of the cable connection 113.

It is thus clear that when referring to the input connector 160 and the output connectors 110 of the signal distribution device, this refers to the typical reference that is made to such connectors in the context of an embodiment of the signal distribution device 100 as a satellite signal distribution device in which signals received from a signal source 300, such as for example a LNB, are received by the input connector 160 and distributed by the signal distribution device 100 via the output connectors 110 to receivers 200, such as for example IRDs. It is however clear that alternative embodiments of the signal distribution device 100 and/or the assembly are possible. Instead of the receivers 200, the assembly 10 could for example comprise other devices coupled to the connectors 110, which are than not necessarily labeled as output connectors 110 of the signal distribution device 100. As will be described in further detail below, in general the signal distribution device 100 comprises a plurality of connectors 110 configured to be coupled to at least one power supplying device 200 comprising a predetermined maximum allowable power limit 210. According to the embodiments of Figures 1 and 2, in the signal distribution device 100 is embodied as a satellite signal distribution device 100, such as for example a multiswitch, a Low Noise Block, etc. the power supplying devices 200 could for example be embodied as suitable receivers 200, such as for example IRDs. It is clear, as shown in Figures 1 and 2, that according to some embodiments one or more power supplying devices 200 are couplable to each of the connectors 110. It is further clear that, in the embodiment shown in Figures 1 and 2, the signal distribution device 100, such as for example a multiswitch, can be powered by extracting power via the connectors 110 from the receivers 200 when coupled thereto, as generally known to the person skilled in the art. It is further also clear that each of the receivers 200, such as a set top box or STB, a recording device, etc. , comprises a predetermined maximum allowable power limit 210. This means that the receiver 200 is only designed to allow extraction of power below a predetermined maximum allowable power limit 210 when coupled to a connector 110 of a signal distribution device 100. According to a particular embodiment of receivers 200, this maximum allowable power limit 210 is for example 6W, or 3W or any other suitable value for such a receiver 200, for example in the range of 2W to 8W. It is however clear that alternative embodiments of such a power supplying device 200 are possible, in which the maximum allowable power limit 210 differs from the above-mentioned examples. According to a particular embodiment, the power supplying devices 200 could for example comply with the Power over Ethernet or PoE standard, in which power supplying devices 200, which is for example a power sourcing equipment or PSE, for example comprise a maximum allowable power limit 210 of for example up to 12,95W according to one embodiment, or up to 25,5W, or up to 51W, or up to 71W according to alternative embodiments, etc. and operate to provide power to a signal distribution device 100, which is for example a powered device or PD. It is clear that still further alternative embodiments are possible, as long as in general the predetermined maximum allowable power limit 210 of a single power supplying device 200, which is coupled to the connector 110 of the signal distribution device 100, is lower than the power required by the signal processing circuit 130 as will be described in further detail below. It is thus clear that in general the power required by the signal processing circuit 130, and optionally any other components of the signal distribution device 100 which extract power from the power supplying devices by means of the power supply circuit 120, exceeds the maximum allowable power limit 210 of single power supplying device 200 of the assembly 10. This thus means that, in a worst-case scenario, in which the assembly 10 comprises only one power supplying device 200 which is available for providing power to a signal distribution device 100, when applying the prior art solutions as described above, there would be a risk that the power extracted from this power supplying device 200 would exceed the maximum allowable power limit 210. According to one embodiment, the power required by an embodiment of the signal distribution device 100 as a satellite signal distribution device, such as for example a multiswitch, could for example be 8W or higher, for example 10W. It is thus clear that according to such an embodiment, there is provided an assembly 10, in which power supplying devices 200 are for example receivers 200, such as for example IRDs, with for example a maximum allowable power limit 210 of 6W, which is exceeded by the power required by the signal processing circuit 130 of for example 10W. It should however be clear that, these exemplary values are merely provided in function of clarifying the description of the operation of the signal distribution device and the other devices of the embodiments of the assembly 10, and that numerous alternative suitable values are possible.

As already mentioned above, according to the embodiment shown in Figures 1 or 2, the signal distribution device 100 comprises two connectors 110 configured to be coupled to at least one power supplying device 200. As also mentioned above, these power supplying devices 200 comprise a predetermined maximum allowable power limit 210. As further shown, the signal distribution device 100 further comprises a power supply circuit 120, coupled to these two connectors 110 and the signal processing circuit 130. This power supply circuit 120 is configured to power the signal processing circuit 130 by extracting power via said connectors 110 when extracting power from said at least one power supplying device 200 when coupled to said connectors 110. This means that, when at least one power supplying device 200, such as an IRD, is coupled to the first output connector 112, or when at least one power supplying device 200, such as an IRD, is coupled to the second output connector 112, the power supply circuit 120 will be operated to extract from these power supplying devices 200 via their corresponding connector 110. It is clear that, when the power supply circuit 120 extracts power from such a power supplying device 200, it is coupled to its connector 110 in such a way that power can be extracted from this power supplying device 200, for example by means of a coaxial cable, or any other suitable coupling that allows for a suitable extraction of power from the power supplying device 200 via its connector 110. It is clear that, when the power supply circuit 120 extracts power from the at least one power supplying device 200 via a particular connector 110, this means that at least one power supplying device 200 coupled to this particular connector 110 is operating in a power supplying mode, which is typically associated with an operating mode in which the power supplying device 200 is actively making use of the signal processing circuit 130 of the signal. According to the embodiment of Figures 1 and 2, this for example means, when the receiver 200 is activated and for example making use of the signal distribution device 200 in order to receive a desired satellite television signal from the signal source 300. It is clear that other operating modes of the receiver 200 are possible, in which, even when coupled to the connector 110, the power supply circuit 120 is not able to extract power for the signal processing circuit 130 from the receiver 200 via the connector 110, such as for example an operating mode in which the receiver 200 is switched off, inactive, in power saving mode, etc. It is clear that similar operating modes are available for other embodiments of power supplying devices 200, and that when reference is made in this description to the power supply circuit 120, when extracting power from a power supplying device 200 a connector 110, this means that the power supplying device 200 is suitably coupled to the connector 110 and operating in such a power supplying mode as generally known to a man skilled in the art.

As further shown in Figures 1 and 2, the signal processing circuit 130 comprises a plurality of modules 132, 134, 136 requiring power provided at a corresponding plurality of supply voltages. According to the embodiment shown, there are three modules, however it is clear that alternative embodiments are possible in which there are a different plurality of modules and corresponding plurality of supply voltages, such as for example two, four, five, etc. According to the embodiment shown, the signal processing circuit 130 comprises for example a suitable integrated circuit, system-on-chip, application specific integrated circuit, a digital signal processor, or any other suitable embodiment of a signal processing circuit 130. According to the embodiment shown the signal processing circuit is embodied as a single integrated circuit. However, it is clear that the signal processing circuit 130, according to alternative embodiments, could comprise a plurality of such integrated circuits, and/or optionally other suitable components. According to a particular embodiment, the signal processing circuit 130 could for example be embodied as a suitable component comprised in a signal distribution device 100 for satellite signals referred to as Channel Stacking Systems or CSS, and more particularly embodiments of signal distribution devices 100 referred to as digital Channel Stacking Systems or digital Channel Stacking Switches or dCSS have become available. For example, Maxlinear provides the MxL86x family of digital satellite Channel Stacking Switch, which is provided as a System on Chip or SoCs, or a single integrated circuit or IC which provides the functionality of most of the analogue filtering, frequency translation, etc. components as generally known to a skilled person, and for example described in more detail in WO2017/063822, by means of a digital signal processing integrated circuit. An alternative dCSS Soc is for example provided by Entropic as the EN5520 integrated circuit. Still a further dCSS system that makes use of a Digital Switching and Signal Processing (DSSP) circuit is known from WO2009/143082. It is clear that such dCSS circuits are suitable for use as a signal processing circuit 130 in a signal distribution device 100 for distribution of satellite signals to suitable IRDs which function as power supplying devices 200 for the signal processing circuit 130. As for example shown in Figure 2, such an embodiment also allows for coupling a plurality of such SCR receivers 200 to a single connector, as generally known to a person skilled in the art. Although such dCSS Soc signal processing circuits 130 provide for a reduction in design complexity, system cost, and power consumption, the desire to integrate further functionality into the signal processing circuit 130 increases its required power such that it exceeds the maximum allowable power limit 210 of a single power supplying device 200 which is couplable to the connectors 110 of the signal processing circuit 130.

The three modules 132, 134 and 136 of the embodiment of the signal processing circuit shown in Figures 1 or 2, for example correspond to three different modules of the integrated circuit, which need to be fed at three different supply voltages, for example a processor core module 132 requiring power provided at a supply voltage of 0,9V, a signal conversion and memory module 134 requiring power provided at a supply voltage of 1,05V and an input/output module 136 requiring power provided at a supply voltage of 1,8V. It is clear that alternative embodiments are possible in which the signal processing circuit comprises another plurality of modules, requiring power at other suitable supply voltages. According to still further alternative embodiments some of the modules could require power at a same supply voltage. According to the embodiment described above, in which the signal processing circuit 130 for example requires 10W of power, this means that, when all modules 132, 134, 136 of the signal processing circuit 130 are in operation, the signal processing circuit 130 requires 10W of power. However, it is clear that according to this embodiment, this 10W is the aggregated power required by all modules 132, 134, 136, and that each of the modules 132, 134, 136, when in operation requires a lower power. According to a particular embodiment, the module 132 requires for example 5W, the module 134 requires for example 3W and the module 136 requires 2W during operation.

As will be explained in further detail below, in such a particular operating mode, the power supply circuit 120 is configured to generate the plurality of supply voltages for the corresponding plurality of modules 132, 134, 136 of the signal processing circuit 130 in such a way that it is prevented that all modules 132, 134, 136 extract power via the same connector 110 when extracting power from the at least one power supplying device 200 when coupled to this connector 110. In this way, it is prevented that the signal processing circuit 130 overloads the power supplying device 200, when only a single power supplying device 200 is available for providing power to the signal distribution device 100.

According to the embodiments shown in Figures 1 or 2, this situation could occur when, for example the power supplying device 202 is the only power supplying device 200 available for providing power to the signal distribution device 100, for example because it is the only power supplying device 202 coupled to the first connector 112, and no other power supplying devices 200 or other devices capable of providing power to the signal distribution device 100 are coupled to the signal distribution device 100, or because the power supplying device 202 is the only device operating in a power supplying mode in which it is able to provide power to the signal distribution device 100. In such a situation the signal distribution device 100, the power supply circuit 120 will in this way prevent that the single power supplying device 202 will be overloaded as it will prevent the extraction of the power for all modules 132, 134, 136 of the signal processing circuit 130 from the same connector 112 to which this power supplying device 202 is coupled. It is clear that in this way the power supply circuit 120 will prevent that the required power for all modules 132, 134, 136 of the signal processing circuit 130, of for example 10W, which exceeds the predetermined maximum power limit of a single power supplying device 200, of for example 6W or 3W, will be extracted from the power supplying device 202, thereby leading to an overloading of the power supplying device 202, a faulty operation of the signal processing circuit 130 because of a lack of sufficient power, and/or the impossibility to guarantee the required power for the signal processing circuit 130 to be delivered at the required operating voltages for the plurality of modules 132, 134, 136, etc. It is clear that, when, such as for example shown in the embodiment of Figure 2, a plurality of power supplying devices 204, 206 are coupled to the connector 114 of the signal distribution device 100, also here it is prevented that all modules 132, 134, 136 of the signal processing circuit extract the required power from the same connector 114. As it is possible that an operating condition occurs in which only one of these power supplying devices coupled to the connector 114, for example power supplying device 204, is operating in a power supplying mode, similar as described above, it can be prevented that this power supplying device 204 is overloaded and/or there is caused an erroneous operation of signal processing circuit 130, etc. because the power supply module 120 is configured to prevent extraction of the power required by all modules 132, 134, 136 from the same connector 110 when extracting power from the at least one power supplying device 200 when coupled to this connector 110. It is thus clear that the signal distribution device 100 could comprise other connectors, such as for example connectors 150, 160, 170, or any other suitable further connectors, however the connectors 110 consist of the connectors of the signal distribution device 100 which are coupled to a power supplying device 200 in such a way that power can be extracted from the power supplying device 200 via this connector 110. It is thus clear that, according to a preferred embodiment, other types of connectors 150, 160, 170, or connectors 110 which are coupled to other devices than power supplying devices 200 when the power supply circuit 120 extracts power from at least one power supplying device 200 with a predetermined maximum power limit that is exceeded by the required power of all modules 132, 134, 136 of the signal processing circuit 130, thus do not qualify as such connectors 110, of which the power supply circuit 120 is configured to prevent that the power extracted by all modules 132, 134, 136 of the signal processing circuit 130 is extracted via the same connector.

It is thus clear, that in this way there can thus be made use of a signal processing circuit 130 of which the power required by all modules 132, 134, 136 of the signal processing circuit 130 exceeds the maximum allowable power limit 210 of a single power supplying device 200, without the risk of overloading the power supplying devices 200 of the assembly 10, or entering a faulty operating mode of the signal distribution device 100 of the assembly 10, even in worst case operating conditions, in which for example only a single power supplying device 200 is available for supplying power to the signal distribution device 100. In such situations, the power supply circuit 120 generates the supply voltages in such a way that one or more of the modules 132, 134, 136, but not all of the modules 132, 134, 136, extract power from an associated one of the connectors 110 when coupled to this power supplying device 200. Or in alternative embodiments, from this one connector 110 when coupled to, and thus associated with, at least one power supplying device 200, such as for example described with reference to Figure 2 above, with respect to the power supplying devices 204, 206 coupled to the same connector 114.

Preferably, according to the embodiments shown in Figures 1 and 2, the plurality of modules 132, 134, 136 of the signal distribution device are divided in a plurality of subsets 142, 144. This thus means two such subsets 142, 144, according to the embodiment shown. A first subset 142 comprising the module 132 and a second subset 144 comprising the two other modules 134, 136. It is clear that, numerous alternative examples are possible as long as the plurality of modules 132, 134, 136 consist of a plurality of non-empty, non-overlapping subsets 142, 144, each subset 142, 144 comprising at least one module 132, 134, 136. Each subset 142, 144 according to such an embodiment thus comprises one or more modules 132, 134, 136, and preferably no modules 132, 134, 136 are part of more than one of the subsets 142, 144. According to the embodiment shown in Figures 1 and 2, the power supply circuit 120 is further configured to generate the supply voltages in such a way that each subset 142, 144 is configured to extract power from a different one of the connectors 110 when coupled to at least one power supplying device 200. This means for example that, in the state of the system shown for example in Figure 1, when all the shown power supplying devices 200 are operating in a power supplying mode, for example the power supplying device 202 coupled via the first connector 112 to the power supply circuit 120, will be used by the power supply circuit 120 to extract the power required for the first subset 142 of the signal processing circuit comprising the module 132. According to the example mentioned above, in which for example the required power for the module 132 is 5W, and the maximum power limit 210 of the power supplying device 202 is 6W, it is clear that the required power for the first subset 142 can be extracted by the power supply circuit from the power supplying device 202 via the first connector 112 without causing any risks for overloading or a faulty operation as mentioned above. Further, according to the example mentioned above, in which for example the required power for the module 134 is 3W and for the module 136 is 2W, it is clear that the required power for the second subset 144 will total 5W, and will thus be lower than the maximum power limit 210 of the power supplying device 204 coupled to the power supply circuit 120 via the second connector 114. The power supply circuit 120 when extracting the required power from this power supplying device 204 via the second connector 114 for providing the required power to the second subset 144, will also be able to do this without causing any risk for overloading or a faulty operation as mentioned above. It is clear that alternative embodiments are possible, as long as preferably the power supply circuit 120 generates the supply voltages in such a way that each subset 142, 144 is configured to extract power from a different one of the connectors 110 when coupled to at least one power supplying device 200. It is clear that alternative embodiments are possible in which there are more than two connectors 110 and/or in which there are more than two subsets 142, 144. It should further also be clear that such an operation of the power supply circuit 120 remains possible, even if there is not a one on one correspondence between the number of subsets 142, 144 and the number of subsets, as long as the power supply circuit 120 powers each of the subsets 142, 144 via a different connector 110 when coupled to at least one power supplying device 200.

Preferably, as described in the example above the plurality of subsets 142, 144 are configured such that the power required by the one or more modules 132, 134, 136 of each subset 142, 144 does not exceed the predetermined maximum allowable power limit 210 of the power supplying devices 200. According to the example above the power required by each subset 142, 144 individually totals 5W and is thus lower than the maximum power limit 210 of 6W. The configuration of the subsets 142, 144 with respect to the associated connector 110 from which power can be extracted via the power supply circuit 120 could be fixed or hard-wired in the power supply circuit 120, but it is clear that alternative embodiments are possible in which a dynamic configuration of the number subsets 142, 144 and/or the one or more modules 132, 134, 136 they comprise is made by the power supply circuit 120, for example in function of the number of connectors 110 which are coupled to at least one power supplying device 200 operating in a power supplying mode.

It is clear that numerous alternative embodiments are possible with respect to the values for the maximum allowable power limit 210 of the power supplying devices. According to such alternative embodiments, the maximum allowable power limit 210 of each of the power supplying devices should not be identical, as long as in general the power required by all modules 132, 134, 136 of the signal processing circuit 130 exceeds the maximum allowable power limit 210 of a single power supplying device 200. Any other type of device couplable to the connectors 110, thus does not qualify as such a power supplying device 200. Preferably, in line with the examples described above, the predetermined maximum allowable power limit 210 is determined in function of the maximum power that is allowed to be extracted from one power supplying device 200 when coupled to the connector 110. This means that for example, when the maximum power that is allowed to be extracted from the different power supplying devices 200 is not identical, for example because the signal distribution device 100 is configured to serve a plurality of different types or versions of the power supplying devices, such as for example different types or generations of receivers 200 for satellite signals, the maximum allowable power limit could for example be determined in function of the lowest value for the maximum power that is allowed to be extracted of a power supplying device 200 couplable to the signal distribution device. For example when a signal distribution device 100 is able to receive power from two different types of power supplying devices 200 via connectors 110, one type of power supplying device 200 allowing extraction of maximum 3W of power, and a second type of power supplying device 200 allowing extraction of maximum 6W of power, the maximum allowable power limit 210 could be set to a predetermined value of 3W for use in the operation of the power supply circuit 120. According to still further alternative embodiments, the power supply circuit 120 could for example dynamically determine the maximum allowable power limit 210, for example by determining which types of power supplying equipment are coupled to the connectors of the signal distribution device 100. According to still further embodiments, the power supply circuit 120 could for example determine a corresponding maximum allowable power limit 210 for each of the connectors 110 individually, optionally in function of the particular type of the at least one power supplying device 200 coupled to each specific connector 110.

It is thus clear that, in general, in the operating mode described above, the power required by the power supply circuit 120, this means the power extracted by the power supply circuit 120, serves to supply power to at least the signal processing circuit 130, and optionally still further components. In this operating mode, the power supply circuit 120 is thus operating in such a way that the required power to be extracted could exceed the maximum allowable power limit 210 of a single power supplying device 200. The required power to be extracted by the power supply circuit 120 in such an operating mode, could for example be the total of the power required for powering all modules 132, 134, 136 of the signal processing circuit 130, the required power for any other components of the signal distribution device 100 being supplied power by the power supply circuit 120, the power extracted and/or dissipated by the components of the power supply circuit 120 for ensuring its functional operation during this operating mode, etc. It is thus clear that, in the context of this description, when reference is made to the abovementioned operating mode, this means an operating mode of the signal distribution device 100 in which it operates in such a way that the power required by the power supply circuit 120 for powering at least the signal processing circuit 130 exceeds the maximum allowable power limit 210 of a single power supplying device 200. According to the example already mentioned above, in this operating mode, the signal processing circuit 130 could for example require 10W of power, the power supply circuit 120 itself could dissipate 0,8W of power and any other components of the signal distribution device 100 being supplied power by the power supply circuit 120 could for example require 0,2W of power. According to such an example, the power extracted by the power supply circuit 120 would thus total 11W. According to the example described above, this 11W being extracted by the power supply circuit 120 could thus exceed the maximum allowable power limit 210 of the power supplying devices 200 of for example 6W. It is clear that, in this operating mode, the power required by the power supply circuit 120, when powering all modules 132, 134, 136 of the signal processing circuit 130, and optionally any other components of the signal distribution device 100, exceeds the maximum allowable power limit 210 of a single power supplying device 200.

According to the embodiments shown in Figures 1 or 2, preferably the power supply circuit 120 of the signal distribution device 100 is further also coupled to an external power supply 400. The difference between such an external power supply 400 and the power supplying devices 200, is that the external power supply 400 comprising a maximum allowable power limit 410 which exceeds the power required by all modules 132, 134, 136 of the signal processing circuit 130. Typically, the maximum allowable power limit 410 of such an external power supply 400 exceeds the power required by the entire signal distribution device 100. However, it is clear that alternative embodiments are possible and as will be described in further detail below, the maximum allowable power limit 410 of the external power supply 400 more generally should exceed the power required by all modules 132, 134, 136 of the signal processing circuit 130 minus the maximum allowable power limit 210 of a single power supplying device 200. According to the example described above, in which for example the power required by all modules 132, 134, 136 totals for example 10W, and typically the external power supply 400 is also dimensioned to power some other components of the signal distribution device 100, such as for example the components of the power supply circuit 120, the maximum allowable power limit 410 of the external power supply 400 could for example be 15W or higher. It is clear that such an embodiment of the external power supply 400 is capable of powering all modules 132, 134, 136 of the signal processing circuit 130 alone, and typically is able to supply sufficient power to power the entire signal distribution device 100. This thus means that, according to some embodiments, the power supply 400, could also supply power to other components of the signal distribution device 100 than the signal processing circuit 130. According to the embodiment described above in which the power extracted by the power supply circuit 120, in such an operating mode, is for example 11W, it is clear that an external power supply 400 with a maximum allowable power limit 410 of 15W is able to supply sufficient power for the entire signal distribution device 100. The maximum allowable power limit of the external power supply 400 in such a case thus exceeds the power required by the signal distribution device 100, and is advantageous as it allows to power the signal distribution device 100 entirely, even when no power supplying devices 200 are coupled thereto.

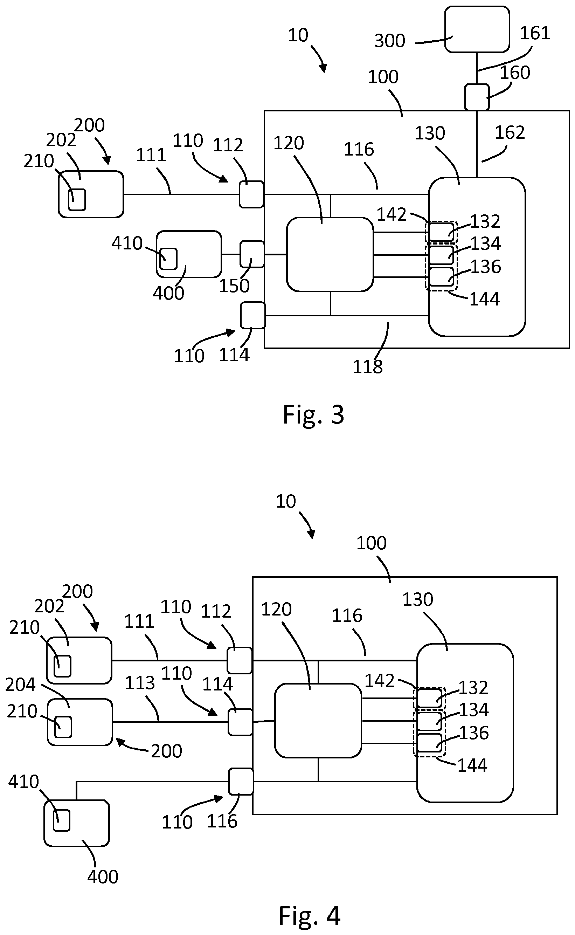

However, according to an alternative embodiment, the maximum allowable power limit 410 of the external power supply 400 can still further be reduced. For example, according to the embodiment of Figures 1 or 2, it is clear that the signal distribution device 100, will only need to activate the signal processing circuit 130, when there is at least one power supplying device 200, in the form of a suitable receiver 200 coupled to at least one of the connectors 110. It is thus clear that, the operating mode, as described above, in which all modules 132, 134, 136 need to be supplied with power by the power supply circuit 120, will only be required in a minimum scenario, such as shown in Figure 3, in which in addition to an external power supply 400, there is also coupled at least one power supplying device 200 to the power supply circuit 120. It is clear that this then allows for an advantageous embodiment of the power supply circuit 120 is configured to extract power from this external power supply 400, only to power the modules 132, 134, 136 of the signal processing circuit 130 which are not able to extract power from this at least one power supplying device 200. According to the example described above, this would for example mean that the power supply circuit 120 will extract the power to be supplied to the subset 142 comprising module 132 via connector 112 from power supplying device 202. The power to be supplied to the other subset 144 of modules 134, 136, will then be extracted by the power supply circuit 120 from the external power supply 400. It is thus clear that, according to such an embodiment, there will be always at least one power supplying device 200 to supplement the power extracted from the external power supply 400. This reduces the power extracted from the external power supply 400. This is advantageous, for example in an embodiment of a satellite signal distribution device, especially in a multiple dwelling context, with a plurality of different end users making use of the signal distribution device, as then a maximum of the power will be extracted from the receivers 200, which actively make use of the signal distribution device 100. The power extracted from the external power supply 400 is then reduced to the absolute minimum, which in a multiple dwelling context is advantageous as such power consumption is typically provided by an external power supply 400 operating on a shared account for all inhabitants of the building, whether they actively make use of the satellite signal distribution system, or not. Additionally, the abovementioned embodiment of the power supply circuit 120 allows to reduce the maximum allowable power limit 410 below the power required by the signal distribution device in the above-mentioned operating mode. Because, as shown in Figure 3, this operating mode is only required, when there is coupled also at least one power supplying device 200 to at least one connector 110, the power extracted from the external power supply 400 will always be assisted by power extracted from at least one power supplying device 200. In this way, the maximum allowable power limit 410 of the external power supply 400 could be reduced to a power level exceeding the power required by the signal distribution device 100 minus the maximum allowable power limit 210 of a single power supplying device 400. In the example above, this thus means that a power level exceeding 11W of the power required by the signal distribution device 100 in this operating mode, minus 6W of the power supplying device 200, could provide for a suitable maximum allowable power limit 410 of the external power supply 400 of 5W. It is however clear that the maximum allowable power limit 410 could be higher, for example to take into account some safety margin for some tolerances, however it is clear that in this way the maximum allowable power limit 410 for such an external power supply 400 can be reduced with respect to the requirements for prior art signal distribution devices. This typically is advantageous as not only the energy consumption for the external power supply 400 is reduced, it also allows usage of a smaller, more energy efficient external power supply 400, capable of operating in a more efficient operating range. According to the example above, instead of an external power supply 400 with a maximum allowable power limit 410 of 15W, there could for example be made use of one with a maximum allowable power limit 410 of 10W.

As shown, according to the embodiments of Figures 1 to 3, the signal distribution device 100 further comprises a power supply connector 150 coupled to the power supply circuit 120 and configured to be coupled to said external power supply 400, such that the power supply circuit 120 is able to extract power from this external power supply 400. According to such an embodiment of a satellite signal distribution device 100, such a power supply connector 150 is, according to the embodiments shown in Figures 1 to 3, a different type of connector than the connectors 110 which are couplable to the power supplying devices 200. The connector 150 is for example a power supply connector, only suitable for coupling to a suitable external power supply 400, while the connectors 110 are typically also suitable for coupling to for example receivers 200 and thus for exchanging signals with the signal processing circuit 130, such as for example via coaxial cable, ethernet cable, etc. It is however clear that alternative embodiments are possible, such as for example shown in Figure 4, in which, the signal distribution device 100 is for example not provided with a dedicated connector for the external power supply 400, but in which the external power supply 400 can be coupled to at least one of the connectors 110. According to such embodiments it is clear that the signal distribution device comprises at least one connector 110, to which at least one power supplying devices 200 are couplable and/or also a suitable external power supply 400 is couplable. Typically, according to such embodiments, the external power supply 400 is provided with a suitable matching connector for the connector 110 of the signal distribution device 100. It is clear that preferably the power supply circuit is able to be configured or to detect automatically to which connector there is coupled an external power supply 400 and to which connector there is coupled at least one power supplying device 200, such as for example a receiver 200. It is clear, that, according to the embodiments of Figures 1 to 3, the power supply circuit 120 can make this determination easily by means of the specific connector 110 or 150 to which there is coupled such a device. According to the embodiment of Figure 4, such a configuration or detection is also possible, for example be means of an exchange of control signals, a detection of the voltage type or level provided at the connector 110 or 150 by the device 110 or 400, etc. It is clear that still further alternative embodiments are possible, similar as will for example be described further below with reference to Figure 5, in which the signal distribution device 100 in addition to, or instead of the power supply connector 150 further comprises at least one other type of connector 160, 170 coupled to said power supply circuit 120 and configured to be coupled to an external power supply 400.

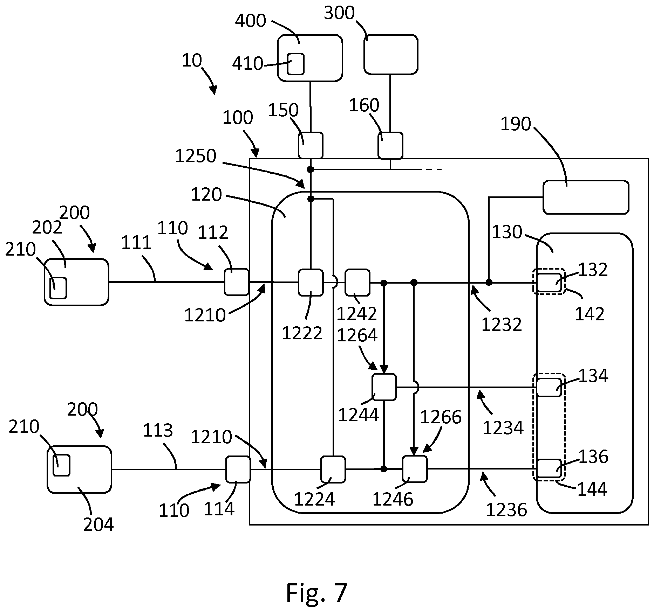

Preferably, the power supply circuit 120 is further configured such that power is provided to the plurality of modules 132, 134, 136 according to a predetermined sequence. This means that according to the operating mode described above, irrespective of the number of connectors 110 which are coupled to a power supplying device 200 operating in a power supplying mode, and irrespective of whether there additionally is available an external power supply 400, this thus means irrespective of the fact that there is available sufficient power to be extracted by the power supply circuit 120 to power all modules 132, 134, 136, the power supply circuit 120 will always ensure that the power is provided to these modules 132 in accordance to predetermined sequence. According to particular embodiments, it is important that for example the core module 132 of the signal processing device is provided with power before the I/O module 136 or vice versa in order for the signal processing circuit not to enter into an erroneous operating mode. Alternatively, instead of defining the predetermined sequence at the level of the modules, the sequence could also be defined at the level of the subsets 142, 144 comprising at least one such module. According to the particular embodiments of Figures 1 to 4, the power supply circuit 120, could for example ensure that, in the above-mentioned operating mode, it ensured that first the subset 142 comprising module 132 is provided with power before the other subset 144 comprising the other modules 134, 136 is powered. Preferably, the power supply circuit 120 is configured to ensure this sequence irrespective of the number of connectors 110 or 150 from which it is able to extract power. According to the embodiment of Figure 1, both power supplying devices 202, 204 are available in a power supplying mode, and optionally also the external power supply 400 is provided, the power supply circuit 120 could be configured to first power the first subset 142 by extracting power from the first power supplying device 112. Then, after the supply voltage for the module 132 of this first subset has been made available, the power supply circuit 120 could be configured to supply power to the second subset 144 by extracting power from the second power supplying device 114, thereby generating the supply voltages for powering the other modules 134, 136. When subsequently the first power supplying device 202, which is for example a suitable receiver, becomes unavailable for extracting power, for example because it is switched off by the user. The power supply circuit 120 will ensure that first the first subset 142 will be supplied with power, for example extracted from the second power supplying device 204, and again that only after the module 132 of this first subset 142 is provided with power at the required supply voltage, the second subset 144 is supplied with power, for example extracted from the external power supply 400 via the power supply connector 150. It is clear that numerous alternative embodiments or situations are possible as long as in general the power supply circuit 120 ensures that power is provided to the plurality of subsets 142, 144 or the plurality of modules 132, 134, 136 according to a predetermined sequence. The power supply circuit 120 could be suitably programmed to dynamically ensure this sequence in all possible scenario's, however, as will be described in further detail below with reference to Figure 7, according to an alternative embodiment the sequence could alternatively for example also be hardwired, or determined in any other suitable way, such that the supply of power to specific modules and/or subsets takes precedence on the supply of power to other specific modules and/or subsets.

Still a further embodiment of an assembly 10 is shown in Figure 5. As shown, according to this embodiment, the assembly 10 comprises a plurality of signal distribution devices 100. These signal distribution devices 100 are similar as the signal distribution devices 100 as described above with reference to Figures 1 to 4, and similar elements are provided with similar references and perform a similar function. The embodiment of Figure 5 comprises a plurality of input connectors 160 for exchanging a plurality of suitable signals with one or more signal sources 300. For increasing clarity, the coupling for the exchange of signals between the signal source 300 and the signal processing circuit 130 have been omitted from Figure 5. Similarly, also the coupling for the suitable exchange of signals between the receivers 200 and the signal processing circuit 130 have also been omitted from Figure 5. It is clear that similarly as described above, the signal processing circuit 130 of the signal distribution device 100, according to the embodiment shown, preferably enables such an exchange of signals between the plurality power supplying devices 200, the signal sources 300, etc. when coupled to signal distribution devices 100 of the assembly 10. It will be clear that the embodiment shown, could for example represent a suitable multiple dwelling satellite signal distribution assembly 10, comprising a plurality of multiple dwelling signal distribution devices 100, such as for example suitable multiple dwelling satellite multiswitches, such as for example known from EP1347644, WO2017063822, etc. Such as known to a person skilled in the art, in addition to such signal distribution devices 100 comprising one or more suitable input connectors 160 for receiving a signal form a signal source 300 such as a satellite signal received from a LNB, a suitable headend, etc. or other suitable signals, such as for example a terrestrial signal, etc., typically also comprise one or more suitable cascade connectors 170, to which these signals received at the input connectors 160 are provided, in such a way that they can be provided to a subsequent signal distribution device of the assembly 10 for further distribution of these signals. According to the embodiment shown, the signals received at the input connectors 160 of the first signal distribution device 102 of the assembly 10 are in this way provided to the cascade connectors 170, which are suitably coupled, for example by means of coaxial cables, or any other suitable type of connection to the input connectors 160 of a subsequent signal distribution device 104. It is thus clear that in this way, the assembly comprises a plurality of cascadable signal distribution devices 100, which are coupled such that the signals of a signal source 300 can be cascaded to subsequent signal distribution devices for exchange with the respective signal processing circuit and the receivers 200 coupled thereto.

According to the embodiment shown in Figure 5 the assembly comprises two signal distribution devices 100, however it is clear that alternative embodiments are possible in which the assembly 10 comprises a different plurality of signal distribution devices 100. As shown, the assembly 10 further comprises a shared external power supply 500. As shown, similar as with the embodiment of Figures 1 and 2 above, this shared external power supply 500 is coupled to a suitable connector 150, which according to the embodiment of Figure 5 is a power supply connector 150 of one of the signal distribution devices. As will be explained in further detail below, the shared power external power supply 500 is similar as the external power supply 400 explained above, however such a shared external power supply 500 is configured to power more than one signal distribution device 100 of the assembly 10. As shown, and generally known to a person skilled in the art, typically, for example in the embodiment mentioned above of a cascadable satellite signal multiswitches 100, the first signal distribution device 102 is cascadably coupled to the second signal distribution device 104 in such a way that the shared external power supply 500 is coupled to the cascade connectors 170 of the first signal distribution device 102, which are in turn coupled to the input connectors 160 of the second signal distribution device 104. As shown, in this way the power of the shared external power supply 500 can be shared amongst both cascadably coupled signal distribution devices 100 of the assembly of Figure 5. This means that the power supply circuits 120 of both cascadably coupled signal distribution devices 100 are able to extract power from this shared external power supply 500, when coupled to any one of the signal distribution devices of the assembly 10. It is clear that alternative embodiments are possible, in which the assembly comprises a different plurality of cascadably coupled signal distribution devices 100, and/or in which there are provided more than one shared external power supply 150, as long as generally, the plurality of signal distribution devices 100 are cascadably coupled in such a way that each signal distribution device 100 is able to extract power from the at least one shared external power supply 500 when coupled to the assembly 10.

According to the embodiment of Figure 5, the shared external power supply 500 for example comprises a maximum allowable power limit 510 which is higher than the power required by the two signal distribution devices 100 of the assembly 10, when operating in the above-mentioned operating mode in which the signal processing circuit 130 exchanges signals with the coupled receivers 200 or other suitable power supplying devices 200 coupled to the output connectors 110. However, as explained above with reference to the embodiments of Figures 1 to 4, the power supply circuit 120 of each of the signal distribution devices 100 of the assembly 10 is preferably configured to extract power in such a way that the power extracted from the power supplying devices 200 takes precedence on the power extracted from the shared external power supply 500, similar as explained with reference to the external power supply 400, it is clear that preferably the maximum allowable power limit 510 of the shared external power supply 500 can be reduced with respect to the power required by the plurality of signal distribution devices 100 of the assembly 10 when operating in the above mentioned operating mode. In this way, according to a preferred embodiment, the maximum allowable power limit 510 is higher than the power required by the plurality of signal distribution devices 100 of the assembly 10 when in said operating mode, minus the maximum allowable power limit 210 of a single power supplying device 200 multiplied by said plurality of said signal distribution devices 100 of said assembly 10. For the example shown in Figure 5, this thus means the power required by both signal distribution devices in the above mentioned operating mode minus twice the maximum allowable power limit 210 of a single power supplying device 200. According to the example given above, in which the power required in this operating mode is 11W for each signal distribution device 100, and in which the maximum allowable power limit 210 of a single power supplying device is 6W, this thus means that the maximum allowable power limit 510 of the shared external power supply 500 should be chosen higher than (2 x 11W) - (2 x 6W) = 10W. It is clear that a predetermined safety margin could be foreseen for the maximum allowable power limit 510 of the shared external power supply 500, so that for example the maximum allowable power limit 510 is chosen to be 15W, however it is clear that in this way preferably the maximum allowable power limit 510 of the shared external power supply 500 can be reduced with respect to that for prior art assemblies, and that preferably it is chosen to be lower than the power required by all signal distribution devices 100 of the assembly 10 when in said operating mode.

Figure 6 shows still a further embodiment, similar to the embodiments described above, and similar elements are provided with similar references and generally perform a similar function as described above. Different from the embodiments described above, the signal distribution device 100, which is most similar to the cascadable signal distribution device 100 of Figure 5. As shown, instead of a single signal processing circuit 130 and a single corresponding power supply circuit 120 as described above, the signal distribution device of Figure 6 comprises two signal processing circuits 130 and two corresponding power supply circuits 120. Each of the signal processing circuits 130 and corresponding power supply circuits 120 operating similarly as described above. It is clear that still further alternative embodiments are possible in which the signal distribution device 100 comprises a different plurality of power supply circuits 120 and corresponding signal processing circuits 130. Each of the signal processing circuits 130 and its corresponding power supply circuit 120, as shown, form a respective signal processing module 180 configured to extract power from at least one of power supplying devices 200 when coupled to the corresponding plurality of connectors 110. According to the embodiment of Figure 6, there is thus a first signal processing module 182 and a second signal processing module 184. It is clear that preferably, the external power supply 400 operates as a backup for when there are insufficient power supplying devices 200 to power the signal processing circuits 130. According to the embodiment shown, it is thus clear that, similar as described above, the plurality of power supply circuits 120 are coupled to this external power supply 400, which only functions as a backup power supply. This means that the plurality of power supply circuits 120 are configured to extract power from said external power supply 400, when coupled, only to power the modules 132, 134, 136 of the corresponding signal processing circuit 130 which are not able to extract power from said at least one power supplying device 200 when coupled to said connectors 110. In this way the external power supply 400 only needs to comprise a maximum allowable power limit 410 which exceeds the power required by the signal distribution device 100 minus the maximum allowable power limit 210 of a single power supplying device 200 multiplied by the number of power supply circuits 120. According to the embodiment shown in Figure 6, this thus means the power required by the signal distribution device 100 minus twice the maximum allowable power limit 210 of a single power supplying device 200. With reference to the embodiments of Figures 1 to 5, the full power operating mode of the signal distribution device 100 has been described as an operating mode in which the power extracted by the single power supply circuit 120 for powering at least the corresponding signal processing circuit 130 exceeds the maximum allowable power limit 210 of a single power supplying device 200. It is clear that according to the embodiment shown in Figure 6 comprising a plurality of signal processing modules 180, and thus a plurality of such power supply circuits 120 and corresponding signal processing circuits 130, the above mentioned operating mode is present, when at least one of the power supply circuits 120 and corresponding signal processing circuits 130 are operating in this way. This thus means that the signal distribution device 100 is operating in this full power operating mode as soon as the power extracted by at least one power supply circuit 120 for powering at least its corresponding signal processing circuit 130 exceeds the maximum allowable power limit 210 of a single power supplying device 200.

Figure 7 shows a particular simple and efficient embodiment of the power supply circuit 120 in more detail, similar as the above-mentioned embodiments. Similar elements are provided with similar references and perform a similar function as described above. As shown, the power supply circuit 120, similar as described above, comprises a plurality of power input ports 1210 coupled to the connectors 110. The plurality of power input ports 1210 are thus configured to be coupled to at least one power supplying device 200 comprising a predetermined maximum allowable power limit 210, such as for example receivers 200 such as an IRD or STB. As further shown, similar as described above the power supply circuit 120 further comprises a plurality of power output ports 1232, 1234, 1236. Similar as described above the power supply circuit 120 is thus configured to supply power, extracted from at least one of the power input ports 1210, at the power output ports 1232, 1234, 1236 at a corresponding plurality of supply voltages. According to the example above, the supply voltage at the power output port 1232, which is coupled to the module 132 of the signal processing circuit 130, is for example 0,9V. The supply voltage at power output port 1234, coupled to the module 134 of the signal processing circuit 130, is for example 1,05V and the supply voltage at the power output port 1236, coupled to the module 136 of the signal processing circuit 130, is for example 1,8V.

According to the embodiment shown in Figure 7, similar as described above, the power supply circuit 120 further comprises a power supply port 1250, which via the power supply connector 150 is couplable to an external power supply 400. As shown, the power supply circuit 120 comprises a first power selector 1222, which is coupled to the first power input port 1210 and the power supply port 1250 and functions to supply power to a first power supply module 1242. As described above, preferably the first power selector 1222 functions to allow the first power supply module 1242 to extract power from the at least one power supplying device 200 when coupled to the connector 112 in the above mentioned operating mode, and only when no power supplying device 200 is coupled to the connector 112 or none of the at least one power supplying devices 200 is operating in a power supplying mode, the first power selector 1222 will allow the first power supply module 1242 to extract power from the external power supply 400 via the power supply connector 150. The power supply module 1242, could for example be a suitable voltage regulator, such as for example a linear voltage regulator, a switching voltage regulator, or any other suitable type of voltage regulator that is configured to convert the power extracted via the power input port 1210 or the power supply port 1250 as selected by the first power selector 1222 to the desired supply voltage for the module 132 of the signal processing circuit 130. The first power selector 1222 could for example be a suitable selector, which detects the presence and/or absence of at least one power supplying device 200 coupled to the power input port 1210 of the power supply circuit 120 via the connector 110 of the signal distribution device 100. Upon detection of the presence of at least one power supplying device 200 operating in a power supplying mode the first power selector 1222 will then couple this at least one power supplying device to the first power supply module 1242, for example by means of a suitable controllable switch. Additionally, or instead of, the latter mode of operation upon detection of the absence of at least one power supplying device 200 operating in a power supplying mode the first power selector 1222 will then couple the external power supply 400 to the first power supply module 1242, for example by means of a suitable controllable switch. It is clear that still further embodiments are possible for the first power selector 1222, such as for example a suitable wired OR circuit, for example implemented by means of diodes, in which the external power supply 400 is provided to the wired OR circuit at a voltage level, below the minimal voltage level of the power supplying device 200 when operating in a power supplying mode. In this way the wired OR circuit, will ensure that the power supplied by the power supplying device 200, when in the above mentioned operating mode, takes precedence on the power supplied by the external power supply 400, thereby only extracting power from the external power supply 400, when no power supplying device 200 is available at the first connector 112.

Similarly as explained above with reference to the first power selector 1222, according to the embodiment shown in Figure 7, there is also provided a second power selector coupled to the second power input port 1210 and the power supply port 1250 for extracting power to be supplied to the second and third power supply modules 1244, 1246, which respectively provide power at the required supply voltage for the second and third 134, 136 module of the signal processing circuit 130. This means that, similar as described above the second selector 1224 will be configured to extract power for these power supply modules 1244, 1246 in such a way that the at least one power supplying device 200 coupled via the second connector 114 to the second power input port 1210 of the power supply circuit takes precedence on the power extracted from the external power supply 400 via the power supply connector 150 and the power supply port 1250 of the power supply circuit 120. As further shown, according to the embodiment of Figure 7, the power supply modules 1244, 1246 comprise an enable port 1264, 1266, which is coupled to the power output port 1232 of the first power supply module 1242. Such an enable port 1264, 1266, as generally known to a person skilled in the art, only enables the output of the power supply module 1244, 1246 upon reception of a suitable signal at this enable port 1264, 1266. According to the embodiment shown, the output of the second and third power supply module 1244, 1246 is for example only enabled after the first power supply module 1242 has achieved the suitable supply voltage for the first power output port 1232. Only after the first power supply module 1242 is supplying power at the required supply voltage, the second and third power supply module 1244, 1246 will be activated, irrespective of the power supplying device 200 or the external power supply 400 from which power can be extracted. In this way, it is clear that, according to such an embodiment, a predetermined sequence to provide power the modules 132, 134, 136 can be realized in a simple and efficient way. It is further clear, that according to this embodiment, this predetermined sequence is similarly realized for the first subset 142 comprising the first module 132, which will always be powered, before the second subset 144 comprising the second and third module 134, 136, thereby ensuring a correct operation of the signal processing circuit 130 irrespective of the availability of the particular power supplying devices 200 for extraction of power, as the external power supply 400 will function as a backup for the power supply modules which cannot extract power from at least one power supplying device 200. Additionally it should be noted that similarly as described above, this embodiment of the power supply circuit 120, when in the above-mentioned operating mode, generates the plurality of supply voltages for the corresponding plurality of modules 132, 134, 136 of the signal processing circuit 130 in such a way that it is prevented that all modules 132, 134, 136 extract power via the same connector 110 when extracting power from the at least one power supplying device 200 when coupled to this connector 110. It is clear that alternative embodiments are possible with a different number of connectors 110, a different number of modules 132, 134, 136 and/or subsets 142, 144 thereof, and a different number and/or sequence for enabling a subsequent power supply module by means of the supply voltage of a previous power supply module in the sequence. As further shown, according to the embodiment, the signal distribution device 100 for example comprises at least one further component 190, such as for example a further electronic circuit, a user interface, a further processor, memory, etc. , which is also supplied power by one of the output ports of the power supply circuit 120. It is clear that still further alternative embodiments are possible, in which one or more additional components of the signal distribution device 100 are supplied power at a suitable voltage generated by the power supply circuit 120.

It should further be clear that the lines for the exchange of signals between the signal processing circuits 130 and the connectors 110 and/or the connectors 160 of the embodiments of Figures 5 to 7 are not shown, merely in function of an increased clarity for the representation of the power exchange lines. It is however clear that these connectors 110, 160 are suitable coupled to the signal processing circuit 130 for the exchange of signals, for example similar as described with reference to the embodiments of Figures 1 to 3.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A signal distribution device (100) comprising:
• a plurality of connectors (110), configured to be coupled to at least one power supplying device (200) comprising a predetermined maximum allowable power limit (210);
• at least one signal processing circuit (130);
• at least one corresponding power supply circuit (120) coupled to said connectors (110) and said signal processing circuit (130), said power supply circuit (120) configured to power at least the signal processing circuit (130) by extracting power via said connectors (110) when extracting power from said at least one power supplying device (200) when coupled to said connectors (110),
• the signal processing circuit (130) comprises a plurality of modules (132, 134, 136) requiring power provided at a corresponding plurality of supply voltages**;**
**characterised in that**:
• the signal distribution device (100) is configured to operate in an operating mode in which the power extracted by at least one power supply circuit (120) for powering at least the corresponding signal processing circuit (130) exceeds the maximum allowable power limit (210) of a single power supplying device (200); and
• the power supply circuit (120), when in said operating mode, is configured to generate the plurality of supply voltages for the corresponding plurality of modules (132, 134, 136) of the corresponding signal processing circuit (130) in such a way that it is prevented that all modules (132, 134, 136) extract power via the same connector (110) when extracting power from the at least one power supplying device (200) when coupled to this connector (110).

2. A signal distribution device according to claim 1, wherein, in said operating mode, the power required by the power supply circuit (120), when powering all modules (132, 134, 136) of the corresponding signal processing circuit (130), exceeds the maximum allowable power limit (210) of a single power supplying device (200).

3. A signal distribution device (100) according to claim 1 or 2, wherein, in said operating mode, the power supply circuit (120) is configured to generate the plurality of supply voltages in such a way that it is prevented that all modules (132, 134, 136) extract power from the same connector (110), when only extracting power via one connector (110) from the at least one power supplying device (200) coupled to this connector (110).

4. A signal distribution device (100) according to any of the preceding claims, wherein, in said operating mode, the power supply circuit (120) is further configured to generate the supply voltages in such a way that one or more of the modules (132, 134, 136), but not all of the modules (132, 134, 136), extract power from an associated one of the connectors (110) when coupled to at least one power supplying device (200).

5. A signal distribution device (100) according to any of the preceding claims, wherein, in said operating mode:
• the plurality of modules (132, 134, 136) consists of a plurality of non-empty, non-overlapping subsets (142, 144), each subset (142, 144) comprising at least one module (132, 134, 136); and
• the power supply circuit (120) is further configured to generate the supply voltages in such a way that each subset (142, 144) is configured to extract power from a different one of the connectors (110) when coupled to at least one power supplying device (200).

6. A signal distribution device (100) according to claim 5, wherein, in said operating mode, the plurality of subsets (142, 144) are configured such that the power required by the one or more modules (132, 134, 136) of each subset (142, 144) does not exceed the predetermined maximum allowable power limit (210) of the power supplying devices (200).

7. A signal distribution device (100) according to claim 6, wherein the predetermined maximum allowable power limit (210) is determined in function of the maximum power that is allowed to be extracted from one power supplying device (200) when coupled to the connector (110).

8. A signal distribution device according to any of the preceding claims, wherein, in said operating mode, said at least one power supply circuit (120) is further configured to:
• be coupled to an external power supply (400) comprising a maximum allowable power limit (410) which exceeds the power required by the signal distribution device (100) minus the maximum allowable power limit (210) of a single power supplying device (200) multiplied by the number of power supply circuits (120), and which is lower than the power required by the signal distribution device (100); and
• extract power from said external power supply (400), when coupled, only to power the modules (132, 134, 136) of the corresponding signal processing circuit (130) which are not able to extract power from said at least one power supplying device (200) when coupled to said connectors (110).

9. A signal distribution device (100) according to any of the preceding claims, wherein the power supply circuit (120) is further configured such that power is provided to the plurality of modules (132, 134, 136) according to a predetermined sequence.

10. A signal distribution device (100) according to any of the claims 5 to 7, wherein the power supply circuit (120) is further configured such that power is provided to the plurality of subsets (142, 144) according to a predetermined sequence.

11. A signal distribution device (100) according to any of the preceding claims, wherein:
- the power supplying devices (200) are receivers; and
- the at least one signal processing circuit (130) is respectively further coupled to said connectors (110) for exchanging signals with said receivers (200) when coupled to said connectors (110).

12. An assembly (10) comprising at least one signal distribution device (100) according to claim 8, wherein the assembly (10) further comprises one or more of the following:
- said at least one power supplying devices (200) coupled to said connectors (110);
- said external power supply (400) coupled to said signal distribution device (100).

13. An assembly comprising a plurality of signal distribution devices (100) according to any of the claims 1 to 11, wherein:
- the assembly (10) further comprises at least one shared external power supply (500);
- the plurality of signal distribution devices (100) are cascadably coupled in such a way that each signal distribution device (100) is able to extract power from the at least one shared external power supply (500) when coupled to the assembly (10); and
- the at least one shared external power supply (500) comprises a maximum allowable power limit (510) which is higher than:
- the power required by the plurality of signal distribution devices (100) of the assembly (10) when in said operating mode; minus
- the maximum allowable power limit (210) of a single power supplying device (200) multiplied by the number of signal distribution circuits (130) of said plurality of said signal distribution devices (100) of said assembly (10).

14. An assembly according to claim 13, wherein the shared external power supply (500) comprises a maximum allowable power limit (510) which is lower than the power required by all signal distribution devices (100) of the assembly (10) when in said operating mode.

15. A method of operating a signal distribution device according to any of the claims 1-11, **characterized in that** said power supply circuit (120), when in said operating mode, generates the plurality of supply voltages for the corresponding plurality of modules (132, 134, 136) of the signal processing circuit (130) in such a way that it is prevented that all modules (132, 134, 136) extract power via the same connector (110) when extracting power from the at least one power supplying device (200) when coupled to this connector (110).

## Patentansprüche

1. Signalverteilungsvorrichtung (100), umfassend:
• eine Vielzahl von Verbindern (110), die konfiguriert sind, um mit mindestens einer Stromversorgungsvorrichtung (200) gekoppelt zu werden, die eine vorbestimmte maximal zulässige Leistungsgrenze (210) umfasst;
• mindestens eine Signalverarbeitungsschaltung (130) ;
• mindestens eine entsprechende Stromversorgungsschaltung (120), die mit den Verbindern (110) und der Signalverarbeitungsschaltung (130) gekoppelt ist, wobei die Stromversorgungsschaltung (120) konfiguriert ist, um mindestens die Signalverarbeitungsschaltung (130) durch Entnahme von Leistung über die Verbinder (110) zu versorgen, wenn bei der Kopplung mit den Verbindern (110) der mindestens einen Stromversorgungsvorrichtung (200) Leistung entnommen wird,
• wobei die Signalverarbeitungsschaltung (130) eine Vielzahl von Modulen (132, 134, 136) umfasst, die Leistung benötigen, die bei einer entsprechenden Vielzahl von Versorgungsspannungen bereitgestellt wird;
**dadurch gekennzeichnet, dass**:
• die Signalverteilungsvorrichtung (100) konfiguriert ist, um in einem Betriebsmodus zu arbeiten, in dem die von mindestens einer Stromversorgungsschaltung (120) zur Versorgung von mindestens der entsprechenden Signalverarbeitungsschaltung (130) entnommene Leistung die maximal zulässige Leistungsgrenze (210) einer einzelnen Stromversorgungsvorrichtung (200) überschreitet; und
• die Stromversorgungsschaltung (120), wenn in diesem Betriebsmodus befindlich, konfiguriert ist, um die Vielzahl von Versorgungsspannungen für die entsprechende Vielzahl von Modulen (132, 134, 136) der entsprechenden Signalverarbeitungsschaltung (130) derart zu erzeugen, dass verhindert wird, dass alle Module (132, 134, 136) Leistung über denselben Verbinder (110) entnehmen, wenn sie bei der Koppelung mit diesem Verbinder (110) der mindestens einen Stromversorgungsvorrichtung (200) Leistung entnehmen.

2. Signalverteilungsvorrichtung nach Anspruch 1, wobei, wenn in diesem Betriebsmodus befindlich, die von der Stromversorgungsschaltung (120) benötigte Leistung bei der Versorgung aller Module (132, 134, 136) der entsprechenden Signalverarbeitungsschaltung (130) die maximal zulässige Leistungsgrenze (210) einer einzelnen Stromversorgungsvorrichtung (200) überschreitet.

3. Signalverteilungsvorrichtung (100) nach Anspruch 1 oder 2, wobei, wenn in diesem Betriebsmodus befindlich, die Stromversorgungsschaltung (120) konfiguriert ist, um die Vielzahl von Versorgungsspannungen derart zu erzeugen, dass verhindert wird, dass alle Module (132, 134, 136) Leistung von demselben Verbinder (110) entnehmen, wenn Leistung nur über einen Verbinder (110) von mindestens einer Stromversorgungsvorrichtung (200) entnommen wird, die mit diesem Verbinder (110) gekoppelt ist.

4. Signalverteilungsvorrichtung (100) nach einem beliebigen der vorhergehenden Ansprüche, wobei, wenn in diesem Betriebsmodus befindlich, die Stromversorgungsschaltung (120) ferner konfiguriert ist, um die Versorgungsspannungen derart zu erzeugen, dass eines oder mehrere der Module (132, 134, 136), aber nicht alle Module (132, 134, 136), bei der Kopplung mit mindestens einer Stromversorgungsvorrichtung (200) Leistung von einem der zugeordneten Verbinder (110) entnehmen.

5. Signalverteilungsvorrichtung (100) nach einem beliebigen der vorhergehenden Ansprüche, wobei in dem Betriebsmodus:
• die Vielzahl von Modulen (132, 134, 136) aus einer Vielzahl von nicht leeren, nicht überlappenden Teilmengen (142, 144) bestehen, wobei jede Teilmenge (142, 144) mindestens ein Modul (132, 134, 136) umfasst, und
• die Stromversorgungsschaltung (120) ferner konfiguriert ist, um die Versorgungsspannungen derart zu erzeugen, dass jede Teilmenge (142, 144) konfiguriert ist, um bei der Kopplung mit mindestens einer Stromversorgungsvorrichtung (200) Leistung von einem unterschiedlichen der Verbinder (110) zu entnehmen.

6. Signalverteilungsvorrichtung (100) nach Anspruch 5, wobei in dem Betriebsmodus eine Vielzahl von Teilmengen (142, 144) so konfiguriert sind, dass die von dem einen oder den mehreren Modulen (132, 134, 136) jeder Teilmenge (142, 144) benötigte Leistung die vorbestimmte maximal zulässige Leistungsgrenze (210) der Stromversorgungsvorrichtungen (200) nicht überschreitet.

7. Signalverteilungsvorrichtung (100) nach Anspruch 6, wobei die vorbestimmte maximal zulässige Leistungsgrenze (210) in Abhängigkeit von der maximalen Leistung bestimmt wird, die bei der Kopplung mit dem Verbinder (110) von einer Stromversorgungsvorrichtung (200) entnommen werden darf.

8. Signalverteilungsvorrichtung nach einem beliebigen der vorhergehenden Ansprüche, wobei in dem Betriebsmodus die mindestens eine Stromversorgungsschaltung (120) ferner konfiguriert ist, um:
• mit einer externen Stromversorgung (400) gekoppelt zu sein, die eine maximal zulässige Leistungsgrenze (410) umfasst, die die von der Signalverteilungsvorrichtung (100) benötigte Leistung abzüglich der maximal zulässigen Leistungsgrenze (210) einer einzelnen Stromversorgungsvorrichtung (200) multipliziert mit der Anzahl der Stromversorgungsschaltungen (120) überschreitet und welche niedriger ist als die von der Signalverteilungsvorrichtung (100) benötigte Leistung; und
• bei der Kopplung Leistung aus der externen Stromversorgung (400) zu entnehmen, um nur die Module (132, 134, 136) der entsprechenden Signalverarbeitungsschaltung (130) zu versorgen, die nicht fähig sind, bei der Kopplung mit den Verbindern (110) Leistung aus der mindestens einen Stromversorgungsvorrichtung (200) zu entnehmen.

9. Signalverteilungsvorrichtung (100) nach einem beliebigen der vorhergehenden Ansprüche, wobei die Stromversorgungsschaltung (120) ferner so konfiguriert ist, dass die Vielzahl von Modulen (132, 134, 136) gemäß einer vorbestimmten Reihenfolge mit Leistung versorgt werden.

10. Signalverteilungsvorrichtung (100) nach einem beliebigen der Ansprüche 5 bis 7, wobei die Stromversorgungsschaltung (120) ferner so konfiguriert ist, dass die Vielzahl von Teilmengen (142, 144) gemäß einer vorbestimmten Reihenfolge mit Leistung versorgt werden.

11. Signalverteilungsvorrichtung (100) nach einem beliebigen der vorhergehenden Ansprüche, wobei:
- die Stromversorgungsvorrichtungen (200) Empfänger sind; und
- die mindestens eine Signalverarbeitungsschaltung (130) ferner jeweils mit den Verbindern (110) gekoppelt ist, um bei der Kopplung mit den Verbindern (110) Signale mit den Empfängern (200) auszutauschen.

12. Anordnung (10), umfassend mindestens eine Signalverteilungsvorrichtung (100) nach Anspruch 8, wobei die Anordnung (10) ferner eines oder mehrere der folgenden Elemente umfasst:
- die mindestens eine Stromversorgungsvorrichtung (200), die mit den Verbindern (110) gekoppelt ist;
- die externe Stromversorgung (400), die mit der Signalverteilungsvorrichtung (100) gekoppelt ist.

13. Anordnung, umfassend eine Vielzahl von Signalverteilungsvorrichtungen (100) nach einem beliebigen der Ansprüche 1 bis 11, wobei:
- die Anordnung (10) ferner mindestens eine gemeinsam genutzte externe Stromversorgung (500) umfasst;
- die Vielzahl von Signalverteilungsvorrichtungen (100) so kaskadierbar gekoppelt sind, dass jede Signalverteilungsvorrichtung (100) fähig ist, bei der Kopplung mit der Anordnung (10) der mindestens einen gemeinsam genutzten externen Stromversorgung (500) Leistung zu entnehmen; und
- die mindestens eine gemeinsam genutzte externe Stromversorgung (500) eine maximal zulässige Leistungsgrenze (510) umfasst, die höher ist als:
- die von der Vielzahl von in diesem Betriebsmodus befindlichen Signalverteilungsvorrichtungen (100) der Anordnung (10) benötigte Leistung; minus
- die maximal zulässige Leistungsgrenze (210) einer einzelnen Stromversorgungsvorrichtung (200) multipliziert mit der Anzahl der Signalverteilungsschaltungen (130) der Vielzahl von Signalverteilungsvorrichtungen (100) der Anordnung (10).

14. Anordnung nach Anspruch 13, wobei die gemeinsam genutzte externe Stromversorgung (500) eine maximal zulässige Leistungsgrenze (510) umfasst, die, wenn in diesem Betriebsmodus befindlich, niedriger ist als die von allen Signalverteilungsvorrichtungen (100) der Anordnung (10) benötigte Leistung.

15. Verfahren zum Betreiben einer Signalverteilungsvorrichtung nach einem beliebigen der Ansprüche 1 bis 11, **dadurch gekennzeichnet, dass** die Stromversorgungsschaltung (120), wenn in diesem Betriebsmodus befindlich, die Vielzahl von Versorgungsspannungen für die entsprechende Vielzahl von Modulen (132, 134, 136) der Signalverarbeitungsschaltung (130) derart erzeugt, dass verhindert wird, dass alle Module (132, 134, 136) Leistung über denselben Verbinder (110) entnehmen, wenn sie bei der Kopplung mit diesem Verbinder (110) der mindestens einen Stromversorgungsvorrichtung (200) Leistung entnehmen.

## Revendications

1. Dispositif de distribution de signaux (100), comprenant :
une pluralité de connecteurs (110), configurés pour être accouplés à au moins un dispositif d'alimentation (200) ayant une limite de courant maximum admissible (210) prédéterminée ;
au moins un circuit de traitement de signaux (130) ;
au moins un circuit d'alimentation (120) correspondant accouplé auxdits connecteurs (110) et audit circuit de traitement de signaux (130), ledit circuit d'alimentation (120) étant configuré pour alimenter au moins le circuit de traitement de signaux (130) en extrayant un courant par l'intermédiaire desdits connecteurs (110) lors de l'extraction de courant dudit au moins un dispositif d'alimentation (200) quand celui-ci est accouplé auxdits connecteurs (110),
le circuit de traitement de signaux (130) comprenant une pluralité de modules (132, 134, 136) qui requièrent un courant fourni à une pluralité correspondante de tensions d'alimentation ;
**caractérisé en ce que** :
le dispositif de distribution de signaux (100) est configuré pour fonctionner dans un mode de fonctionnement dans lequel le courant extrait par au moins un circuit d'alimentation (120) pour alimenter au moins le circuit de traitement de signaux (130) correspondant dépasse la limite de courant maximum admissible (210) d'un seul dispositif d'alimentation (200) ; et
le circuit d'alimentation (120), lorsqu'il est dans ledit mode de fonctionnement, est configuré pour générer la pluralité de tensions d'alimentation pour la pluralité correspondante de modules (132, 134, 136) du circuit de traitement de signaux (130) correspondant de manière à empêcher que tous les modules (132, 134, 136) extraient un courant par l'intermédiaire du même conducteur (110) quand ils extraient un courant de l'au moins un dispositif d'alimentation (200) quand celui-ci est accouplé à ce connecteur (110).

2. Dispositif de distribution de signaux selon la revendication 1, dans lequel, dans ledit mode de fonctionnement, le courant requis par le circuit d'alimentation (120), lors de l'alimentation de tous les modules (132, 134, 136) du circuit de traitement de signaux (130) correspondant, dépasse la limite de courant maximum admissible (210) d'un seul dispositif d'alimentation (200).

3. Dispositif de distribution de signaux (100) selon la revendication 1 ou 2, dans lequel, dans ledit mode de fonctionnement, le circuit d'alimentation (120) est configuré pour générer la pluralité de tensions d'alimentation de manière à empêcher que tous les modules (132, 134, 136) extraient un courant du même conducteur (110), quand ils extraient seulement un courant par l'intermédiaire d'un connecteur (110) de l'au moins un dispositif d'alimentation (200) accouplé à ce connecteur (110) .

4. Dispositif de distribution de signaux (100) selon l'une quelconque des revendications précédentes, dans lequel, dans ledit mode de fonctionnement, le circuit d'alimentation (120) est en outre configuré pour générer la tension d'alimentation de sorte qu'un ou plusieurs des modules (132, 134, 136), mais pas tous les modules (132, 134, 136), extraient un courant d'un connecteur associé des connecteurs (110) quand ceux-ci sont accouplés à au moins un dispositif d'alimentation (200).

5. Dispositif de distribution de signaux (100) selon l'une quelconque des revendications précédentes, dans lequel, dans ledit mode de fonctionnement :
la pluralité de modules (132, 134, 136) consiste en une pluralité de sous-ensembles (142, 144) non vides et non chevauchants, chaque sous-ensemble (142, 144) comprenant au moins un module (132, 134, 136) ; et
le circuit d'alimentation (120) est en outre configuré pour générer les tensions d'alimentation de sorte que chaque sous-ensemble (142, 144) soit configuré pour extraire un courant d'un connecteur différent des connecteurs (110) quand ceux-ci sont accouplés à au moins un dispositif d'alimentation (200).

6. Dispositif de distribution de signaux (100) selon la revendication 5, dans lequel, dans ledit mode de fonctionnement, la pluralité de sous-ensembles (142, 144) sont configurés de sorte que le courant requis par le ou les modules (132, 134, 136) de chaque sous-ensemble (142, 144) ne dépasse pas la limite de courant maximum admissible (210) prédéterminée des dispositifs d'alimentation (200).

7. Dispositif de distribution de signaux (100) selon la revendication 6, dans lequel la limite de courant maximum admissible (210) prédéterminée est déterminée en fonction du courant maximum dont l'extraction, d'un dispositif d'alimentation (200), quand celui-ci est accouplé au connecteur (110), est admise.

8. Dispositif de distribution de signaux selon l'une quelconque des revendications précédentes, dans lequel, dans ledit mode de fonctionnement, ledit au moins un circuit d'alimentation (120) est en outre configuré pour :
être accouplé à une alimentation externe (400) comprenant une limite de courant maximum admissible (410) qui dépasse le courant requis par le dispositif de distribution de signaux (100) moins la limite de courant maximum admissible (210) d'un seul dispositif d'alimentation (200) multipliée par le nombre de circuits d'alimentation (120), et qui est inférieure au courant requis par le dispositif de distribution de signaux (100) ; et
extraire un courant de ladite alimentation externe (400), quand celle-ci est accouplée, seulement pour alimenter les modules (132, 134, 136) du circuit de traitement de signaux (130) correspondant qui ne sont pas en mesure d'extraire un courant dudit au moins un dispositif d'alimentation (200) quand celui-ci est accouplé auxdits connecteurs (110).

9. Dispositif de distribution de signaux (100) selon l'une quelconque des revendications précédentes, dans lequel le circuit d'alimentation (120) est en outre configuré de sorte qu'un courant soit fourni à la pluralité de modules (132, 134, 136) selon une séquence prédéterminée.

10. Dispositif de distribution de signaux (100) selon l'une quelconque des revendications 5 à 7, dans lequel le circuit d'alimentation (120) est en outre configuré de sorte qu'un courant soit fourni à la pluralité de sous-ensembles (142, 144) selon une séquence prédéterminée.

11. Dispositif de distribution de signaux (100) selon l'une quelconque des revendications précédentes, dans lequel :
les dispositifs d'alimentation (200) sont des récepteurs ; et
l'au moins un circuit de traitement de signaux (130) est en outre respectivement accouplé auxdits connecteurs (110) pour échanger des signaux avec lesdits récepteurs (200) quand ceux-ci sont accouplés auxdits connecteurs (110) .

12. Ensemble (10) comprenant au moins un dispositif de distribution de signaux (100) selon la revendication 8, l'ensemble (10) comprenant en outre un ou plusieurs des éléments suivants :
ledit au moins un dispositif d'alimentation (200) accouplé auxdits connecteurs (110) ;
ladite alimentation externe (400) accouplée audit dispositif de distribution de signaux (100).

13. Ensemble comprenant une pluralité de dispositifs de distribution de signaux (100) selon l'une quelconque des revendications 1 à 11, dans lequel :
l'ensemble (10) comprend en outre au moins une alimentation externe partagée (500) ;
la pluralité de dispositifs de distribution de signaux (100) sont accouplés en cascade de sorte que chaque dispositif de distribution de signaux (100) soit en mesure d'extraire un courant de l'au moins une alimentation externe partagée (500) quand celle-ci est accouplée à l'ensemble (10) ; et
l'au moins une alimentation externe partagée (500) comprend une limite de courant maximum admissible (510) qui est supérieur :
au courant requis par la pluralité de dispositifs de distribution de signaux (100) de l'ensemble (10) quand celui-ci est dans ledit mode de fonctionnement ; moins
la limite de courant maximum admissible (210) d'un seul dispositif d'alimentation (200) multipliée par le nombre de circuits de distribution de signaux (130) de ladite pluralité desdits dispositifs de distribution de signaux (100) dudit ensemble (10).

14. Ensemble selon la revendication 13, dans lequel l'alimentation externe partagée (500) comprend une limite de courant maximum admissible (510) qui est inférieure au courant requis par tous les dispositifs de distribution de signaux (100) de l'ensemble (10) quand celui-ci est dans ledit mode de fonctionnement.

15. Procédé de fonction d'un dispositif de distribution de signaux selon l'une quelconque des revendications 1 à 11, **caractérisé en ce que** ledit circuit d'alimentation (120), lorsqu'il est dans ledit mode de fonctionnement, génère la pluralité de tensions d'alimentation pour la pluralité correspondante de modules (132, 134, 136) du circuit de traitement de signaux (130) de manière à empêcher que tous les modules (132, 134, 136) extraient un courant par l'intermédiaire du même conducteur (110) quand ils extraient un courant de l'au moins un dispositif d'alimentation (200) quand celui-ci est accouplé à ce connecteur (110).
